# EUROPÄISCHE PATENTSCHRIFT

(11) **EP 1 239 983 B1**
(45) Veröffentlichungstag und Bekanntmachung des Hinweises auf die Patenterteilung: **01.10.2003**
(21) Anmeldenummer: 00984822.7
(22) Anmeldetag: 11.10.2000
(51) Int. Cl.: B22F 9/08, C22C 1/10, C01B 13/32

(54) **HERSTELLUNG EINES PULVERS AUS GESCHMOLZENEM METALL DURCH ZERSTÄUBUNG MIT REAKTIVEM GAS**
METHOD FOR PRODUCING A POWDER
PROCEDE POUR LA PRODUCTION D'UNE POUDRE

(30) Priorität: 15.10.1999 DE 19949872; 18.01.2000 DE 10001968
(43) Veröffentlichungstag der Anmeldung: 18.09.2002
(73) Patentinhaber: APPLIKATIONS- UND TECHNIKZENTRUM FÜR ENERGIEVERFAHRENS-, UMWELT-, UND STRÖMUNGSTECHNIK, 92237 Sulzbach-Rosenberg (DE)
(72) Erfinder: WOLF, Gerhard, 92224 Hirschau (DE)
(74) Vertreter: Gassner, Wolfgang, Dr.
(86) Internationale Anmeldenummer: DE0003573
(87) Internationale Veröffentlichungsnummer: WO01026853

(56) Entgegenhaltungen:
- EP-A- 0 230 959
- DE-A- 19 523 922
- DE-B- 1 029 571
- US-A- 4 540 546

## Beschreibung

Die Erfindung betrifft ein Verfahren zur Herstellung eines Pulvers durch Zerstäubung eines Strahls aus geschmolzenem Metall mittels eines darauf auftreffenden Zerstäubungsgases.

Zur Herstellung feiner metallischer Pulver mit Partikelgrößen kleiner 100 µm sind nach dem Stand der Technik sogenannte Schmelzzerstäubungsverfahren bekannt. Derartige Verfahren sind beispielsweise in der DE 35 33 964 C1 sowie der DE-OS 1 758 844 offenbart. Schmelzzerstäubungsverfahren beruhen auf dem Prinzip, daß ein aus einem Behälter ausfließender Schmelzstrahl oder -film durch ein mit hoher Geschwindigkeit darauf auftreffendes Zerstäubungsgas fein zerteilt wird. In der Praxis werden dazu die metallische Schmelze und das Zerstäubungsgas über eine externe Mischdüse zusammengeführt.

Aus der DE 26 39 107 C2 ist ein Verfahren zur Herstellung eines Verbundpulvers auf Silber-Cadmiumoxid-Basis bekannt. Dabei wird eine Metallschmelze mit einem nicht reaktiven, d.h. inerten, Gas verdüst. Anschließend wird das durch die Verdüsung hergestellte Pulver in einem zweiten Schritt oxidiert.

Die DE 39 13 649 A1 sowie die DE-OS 24 00 026 beschreiben ein Verfahren zur Herstellung metallischer Pulver aus einer Metallschmelze durch Gasverdüsen. Als Zerstäubungsgas dient inertes Gas. Die DE 28 18 720 offenbart ein Verfahren, bei dem eine Metallschmelze ebenfalls unter Schutzgas verdüst wird. Die Metallschmelze wird mittels Wasser in Metallpartikel zerstäubt.

Die DE-OS 24 46 698 beschreibt ein Verfahren zur Herstellung eines Zweischichten-Kontaktstücks. Dabei wird AgNiO-Pulver durch Verdüsen einer AgNi-Schmelze erhalten. Das durch Verdüsen hergestellte AgNi-Pulver wird nach dem Verdüsen bei 800° C an Luft für etwa 1 Stunde oxidiert.

Aus der DE 39 13 649 C2 ist es bekannt, das Zerstäubungsgas zur Erhöhung der Gasaustrittsgeschwindigkeit vorzuwärmen. Durch die Erhöhung der Gasaustrittsgeschwindigkeit können feinere Partikel erzeugt werden. Das bekannte Verfahren betrifft die Herstellung von metallischen Pulvern, wobei als Zerstäubungsgas ein inertes Gas verwendet wird.

Aus der DE 40 23 278 A1 ist ein Verfahren zur Herstellung von Metalloxidpulvern bekannt. Dabei wird der Schmelzstrahl mit Sauerstoff als Zerstäubungsgas beaufschlagt. Das Zerstäubungsgas wird dabei unmittelbar einem Hochdrucktank entnommen. Es befindet sich in verflüssigtem oder kaltem Zustand. Nachteiligerweise werden bei diesem Verfahren die Partikel nur oberflächlich oxidiert, was für deren Einsatz z.B. als Pigment ausreichend ist. Insbesondere als Ausgangsmaterial zur Herstellung eines Metalls mit vorgegebenen elektrischen, mechanischen, chemischen und/oder physikalischen Eigenschaften ist ein solches nur teilweise umgesetztes Pulver nicht geeignet.

Aufgabe der Erfindung ist es, ein Verfahren zur Herstellung einer vorgegebenen chemischen Verbindung in Form feiner Partikel anzugeben. Ein weiteres Ziel der Erfindung besteht insbesondere darin, ein möglichst effizientes Verfahren zur Herstellung eines homogenen Pulvers zur Herstellung elektrischer Kontaktelemente anzugeben.

Diese Aufgabe wird durch die Merkmale des Anspruchs 1 gelöst. Zweckmäßige Ausgestaltungen ergeben sich aus den Merkmalen der Ansprüche 2 bis 19.

Nach Maßgabe der Erfindung ist ein Verfahren zur Herstellung eines Pulvers durch Zerstäubung eines Strahls aus geschmolzenem Metall mittels eines darauf auftreffenden Zerstäubungsgases vorgesehen, wobei
a) als Zerstäubungsgas ein reaktives Gas verwendet wird, so daß durch Reaktion des Zerstäubungsgases mit dem Metall oder einem Legierungsbestandteil desselben eine Verbindung gebildet wird und
b) die Temperatur des Zerstäubungsgases und die Abkühlungsgeschwindigkeit so eingestellt werden, daß das Metall oder der Legierungsbestandteil desselben in einem Schritt im wesentlichen vollständig in die Verbindung umgewandelt wird.

Mittels des erfindungsgemäßen Verfahrens ist es möglich, eine Verbindung in Form feiner Partikel herzustellen, wobei die Partikel über ihren Querschnitt hinweg eine homogene Zusammensetzung aufweisen. Die Partikel werden durch das reaktive Gas bereits bei der Zerstäubung in eine Verbindung vorgegebener Stöchometrie umgewandelt. Bei der Umwandlung handelt es sich z.B. um eine Oxidation. Es ist gleichfalls möglich, u.U. sphärische Partikel aus einer Legierung herzustellen, wobei mindestens ein Legierungsbestandteil in Form einer Verbindung vorliegt und dieser Legierungsbestandteil im wesentlichen homogen über den Partikelquerschnitt verteilt ist. Mit dem erfindungsgemäßen Verfahren ist es insbesondere möglich, Pulver zur Herstellung metallischer Kontaktelemente mit guter elektrischer Leitfähigkeit bei gleichzeitig hohem Widerstand gegen elektroerosiven Abtrag und abrasiven Verschleiß bzw. verminderter Verschweißneigung anzugeben.

Die Temperatur des Zerstäubungsgases wird so eingestellt, daß sie beim Auftreffen auf den Strahl mindestens dem 0,3-fachen der Schmelztemperatur in °C des Metalls entspricht. Vorteilhafterweise ist die Temperatur des Zerstäubungsgases größer oder gleich der Schmelztemperatur in °C des Metalls. Das Zerstäubungsgas bewirkt bei der gewählten Temperatur eine vollständige Reaktion mit dem Metall bzw. einem Legierungsbestandteil desselben.

Die Abkühlungsgeschwindigkeit ist kleiner als 10² K/s. Auch das vorgenannte Merkmal trägt zu einer vollständigen Reaktion des Zerstäubungsgases mit dem Metall bzw. dem Legierungsbestandteil bei.

Vorteilhafterweise handelt es sich bei der Verbindung um ein Metalloxid, -nitrid oder -carbid. Demzufolge werden zweckmäßigerweise als Zerstäubungsgas Luft, Stickstoff, Ammoniak, Sauerstoff, kohlenstoffhaltiges Gas oder ein Gemisch davon verwendet. Dem Zerstäubungsgas oder dem Gemisch kann auch Edelgas zugesetzt werden.

Nach einer weiteren Ausgestaltung kann das Metall eine mindestens aus einem ersten und einem zweiten Legierungsbestandteil gebildete Legierung sein. Der erste Legierungsbestandteil kann in schmelzflüssigem Zustand in einem ersten Behälter und der zweite Legierungsbestandteil in schmelzflüssigem Zustand in einem zweiten Behälter aufgenommen sein, wobei der erste und der zweite Legierungsbestandteil in einem zu der Schmelzauslaßöffnung führenden Mischrohr gemischt werden können. Insbesondere zur Herstellung von Pulvern zur Herstellung elektrisch leitender Werkstoffe für elektrische Schaltkontakte ist es zweckmäßig, daß die Schmelze des ersten Legierungsbestandteils mit Sauerstoff gesättigt wird. In diesem Fall kann der zweite Legierungsbestandteil unter inerten Bedingungen geschmolzen werden. Beim ersten Legierungsbestandteil kann es sich um Silber oder Kupfer handeln, wobei der zweite Legierungsbestandteil zweckmäßigerweise Zinn, Indium, Wismut oder ein Gemisch davon ist.

Bei Anwendung des erfindungsgemäßen Verfahrens auf eine Legierung mit den vorgenannten Legierungsbestandteilen bilden sich unter Verwendung von Sauerstoff als Zerstäubungsgas überwiegend feine sphärische Partikel, die in homogener Verteilung z.B. in einer aus Silber gebildeten Matrix Zinnoxidausscheidungen enthalten. Das ermöglicht die Herstellung eines elektrisch leitfähigen Bauteils durch z.B. Sintern oder Heißpressen eines solchen Pulvers. Durch die besonders homogene Verteilung von Zinnoxid in der Matrix wird die Neigung des Werkstoffs zum durch Überschlag bedingten Verschweißen daraus hergestellter Kontaktelemente herabgesetzt; er weist eine hervorragende Stabilität gegen elektroerosiven Abtrag und abrasiven Verschleiß auf.

Es hat sich als zweckmäßig erwiesen, den Durchsatz an Zerstäubungsgas auf 1 bis 10 Nm³/min einzustellen, wobei unter Nm³ ein "Nonnkubikmeter" verstanden wird. Der Vordruck des Zerstäubungsgases kann auf 1 bis 50 bar eingestellt werden.

Eine besonders geringe Abkühlgeschwindigkeit läßt sich dadurch erzielen, daß das Metall während der Reaktion zumindest zeitweise in einer im wesentlichen horizontalen Flugbahn geführt wird. Dazu und zur Einstellung der Abkühlungsgeschwindigkeit kann stromabwärts der Schmelzauslaßöffnung Zerstäubungsgas auf den Partikelstrom geführt werden.

Nach einem weiteren Ausgestaltungsmerkmal wird das Pulver nach der Bildung der Verbindung gekühlt. Dazu kann das Pulver mit Gas, verflüssigtem Gas oder Wasser beaufschlagt werden. Die Beaufschlagung kann sowohl im Gegenstrom als auch in Stromrichtung erfolgen. Als Gas kann Luft, Sauerstoff, Stickstoff, Edelgas oder ein Gemisch daraus verwendet werden.

Nachfolgend wird das erfindungsgemäße Verfahren anhand von Ausführungsbeispielen näher erläutert.

### A. Herstellung von Pulvern mit einer mittleren Korngröße von ≤ 10µm.

Zur Herstellung einer Verbindung in Form eines feinen sinteraktiven Pulvers wird die Temperatur des Zerstäubungsgases in einem Bereich zwischen dem 0,3-fachen der Schmelztemperatur in °C des Metalls und der Schmelztemperatur des Metalls gewählt. Durch den Kontakt des Zerstäubungsgases wird an der Oberfläche der Metalltröpfchen die Verbindung gebildet. Sie platzt in Form irregulär geformter Bruchstücke ab, bis das Metalltröpfchen vollständig zur Verbindung umgesetzt ist. Auf diese Weise kann aus dem Metall eine Verbindung hergestellt werden, die einer vorgegebenen Stöchometrie entspricht. Z.B. kann das Metall vollständig in sein Oxid umgesetzt werden.

### B. Herstellung eines Pulvers mit sphärischen Partikeln

Zur Herstellung eines aus sphärischen Partikeln gebildeten Pulvers wird die Temperatur des Zerstäubungsgases höher gewählt als die Schmelztemperatur der sich ausbildenden Verbindung. Die nach der Reaktion des Zerstäubungsgases mit dem Metall gebildete Verbindung bleibt für eine gewisse Zeit im schmelzflüssigem Zustand. Es bilden sich sphärische Parikel mit einer Korngröße von höchstens 100µm aus.

### C. Herstellung von Partikeln mit einer darin fein verteilten Verbindung

Zur Herstellung eines Silberpulvers mit darin fein verteilten oxidischen Ausscheidungen, wie z.B. SnO₂, In₂O₃ und/oder Bi₂O₃, wird Silber als erster Legierungsbestandteil in einem ersten Behälter geschmolzen. Die Silberschmelze wird z.B. mittels einer Sauerstoff-Lanze mit Sauerstoff gesättigt.

Als zweiter Legierungsbestandteil wird z.B. Zinn in einem zweiten Behälter unter Inertgas-Atmosphäre geschmolzen.

Der erste Legierungsbestandteil, nämlich Silber, und der zweite Legierungsbestandteil, z.B. Zinn, werden in schmelzflüssigem Zustand über Zulaufleitungen einem gemeinsamen Mischrohr zugeführt, welches zu einer Ringdüse führt.

Im Mischrohr wird der schmelzflüssige erste Legierungsbestandteil mit den schmelzflüssigen zweiten Legierungsbestandteil Zinn gemischt. Dabei wird aus der Schmelze des ersten Legierungsbestandteils Sauerstoff freigesetzt. Die Freisetzung des Sauerstoffs bewirkt eine turbulente und damit vollständige Mischung des ersten und zweiten Legierungsbestandteils. Durch den freigesetzten Sauerstoff wird das Zinn noch vor dem Austritt aus der Ringdüse teilweise oxidiert.

Die Mischung tritt dann aus der Ringdüse aus. Sie wird unmittelbar nach dem Austritt mit sauerstoffhaltigem vorgeheiztem Zerstäubungsgas beaufschlagt, welches durch den Ringspalt der Ringdüse austritt. Das Zerstäubungsgas ist derart vorgeheizt, daß es beim Auftreffen auf den austretenden Schmelzstrahl in einem Bereich zwischen den Schmelztemperaturen der Legierungsbestandteile liegt.

Durch die Beaufschlagung des Schmelzstrahls mit sauerstoffhaltigem Gas wird eine vollständige Oxidation des zweiten Legierungsbestandteils bewirkt. Gleichzeitig formt sich der Schmelztropfen sphärisch ein und erstarrt zu einem Partikel. Der oxidierte zweite Legierungsbestandteil ist homogen über den im wesentlichen runden Partikelquerschnitt verteilt.

Nach der Reaktion des zweiten Legierungsbestandteils mit dem Zerstäubungsgas gelangen die gebildeten sphärischen Partikel in eine Abkühlzone. Sie werden dort im Gegenstrom mit Kühlfluid beaufschlagt. Bei dem Kühlfluid kann es sich um Gas, Wasser oder Flüssiggas handeln. Die abgekühlten Partikel werden sodann in einem Auffangbehälter gesammelt und entfernt. Z.B. über einen Zyklonabscheider werden das Zerstäubungsgas, Feinstpartikel und Kühlfluid abgezogen und ggf. nach Trennung und Reinigung dem Prozeß wieder zugeführt.

Auf die Sättigung der Schmelze des ersten Legierungsbestandteils mit Sauerstoff kann selbstverständlich auch verzichtet werden. Z.B. können sphärische Kupferpartikel mit oxidischen Ausscheidungen durch die Verdüsung eine Mischung aus Kupfer und Aluminium unter Beaufschlagung mit vorgeheiztem sauerstoffhaltigem Gas hergestellt werden.

Eine Vorrichtung zur Durchführung des Verfahrens wird anhand der Zeichnung beispielhaft näher beschrieben. Es zeigen:
- Fig.1: eine schematische Seitenansicht einer Zerstäubungsanlage und
- Fig.2: eine Querschnittsansicht eines Doppelbehälters.

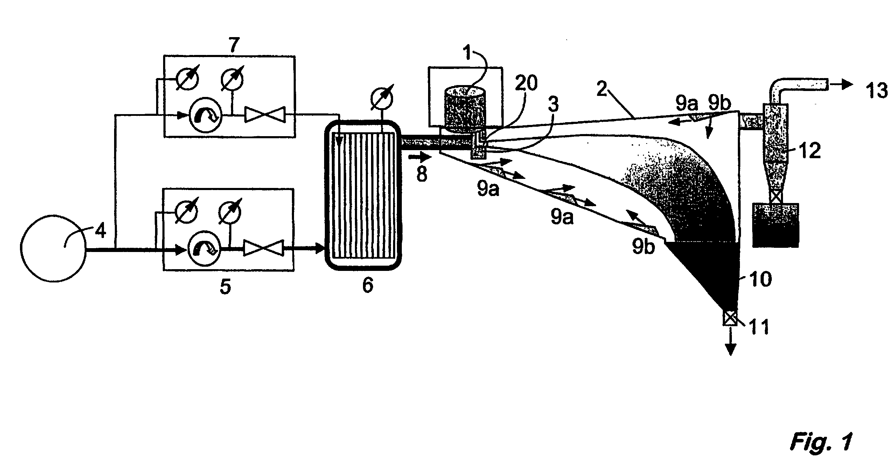

In Fig.1 ist mit 1 eine Schmelzvorrichtung und mit 2 eine Zerstäubungskammer bezeichnet. Die Schmelzvorrichtung 1 weist einen Behälter auf, in dem sich das zu verdüsende geschmolzene Metall befindet. Vom Behälter führt ein Zulauf mit einer Schmelzaustrittsöffnung 20 in eine Zerstäubungskammer 2. Ein Zerstäubungsgas befindet sich in einem Druckvorratstank 4. Das Zerstäubungsgas kann über eine erste Gasentspannungseinrichtung 5 einer Gasheizeinrichtung 6 zugeführt werden. Bei der Gasheizeinrichtung 6 kann es sich z.B. um einen Pebble-Heater handeln. Bei Verwendung eines Pebble-Heaters kann zur Dosierung der Austrittstemperatur des Zerstäubungsgases ferner eine zweite Gasentspannungseinrichtung 7 mit der Gasheizeinrichtung 6 verbunden sein. In der Gasheizeinrichtung 6 wird das Gas auf eine vorgegebene Temperatur aufgeheizt. Die Gasheizeinrichtung 6 ist über ein Zuführrohr 8 mit der Ringdüse 3 verbunden. Die Ringdüse 3 weist vorzugsweise einen Ringspalt auf, der nahe am Austritt des Schmelzstrahls angeordnet ist. Der Ringspalt umgibt konzentrisch die Schmelzauslaßöffnung. Nach einer vorteilhaften Ausgestaltung ist vorgesehen, daß die Breite des Ringspalts einstellbar ist. Damit ist es möglich, Gasdurchsatzraten zu regeln. Die Gasaustrittsöffnungen sind vorzugsweise so ausgestaltet, daß das Zerstäubungsgas unter einem Winkel zwischen 0° bis 30°, vorzugsweise zwischen 10° und 25°, auf die Schmelzstrahlachse auftrifft. Es ist ebenso möglich, anstelle des Ringspalts Einzelbohrungen vorzusehen.

Mit dem Bezugszeichen 9a sind erste Düsen bezeichnet, die stromabwärts der Ringdüse 3 angeordnet sind. Durch die ersten Düsen 9a wird ebenfalls vorgeheiztes Zerstäubungsgas gegen den Partikelstrom geblasen. Dadurch wird einerseits die Flugbahn im wesentlichen horizontal gehalten und andererseits die Abkühlungsgeschwindigkeit der Partikel verringert. Mit 9b sind zweite Düsen zur Zufuhr von Kühlmittel bezeichnet. Bei dem Kühlmittel kann es sich um Gas, verflüssigtes Gas oder Wasser handeln. Die zweiten Düsen 9b sind vorzugsweise so angeordnet, daß ein Umbiegen des Partikelstroms in eine vertikalen Flugbahn ermöglicht wird.

Ein konischer Auffangbehälter ist mit 10, ein Bodenabzug mit 11 bezeichnet. Zum Abtrennen der Feinstfraktion ist ein Zyklonabscheider 12 mit nachgeschalteter Kühlvorrichtung 13 vorgesehen.

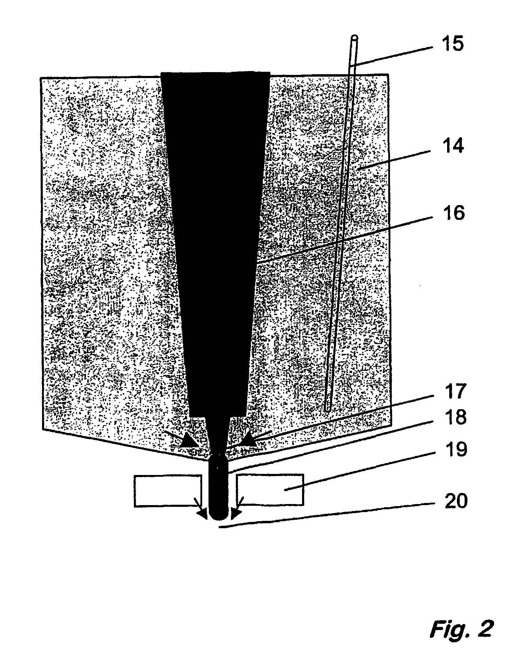

Zur Herstellung von Partikeln, die aus einem ersten und einem zweiten Legierungsbestandteil gebildet sind, kann der in Fig.2 gezeigte Doppelbehälter verwendet werden. Er besteht aus einem ersten Behälter 14 und einem zweiten Behälter 16. Mit 15 ist eine Gaslanze bezeichnet, die in den ersten Behälter 14 eingetaucht werden kann. Der zweite Behälter 16 ist geschlossen. Er ist mit einem Inertgas spülbar. Eine den zweiten Behälter 16 mit einem Mischrohr 18 verbindende Zuführleitung ist mit 17 bezeichnet. Das Mischrohr 18 weist eine Schmelzaustrittsöffnung 20 auf. Mit 19 ist ein Ringspalt bezeichnet, durch den das Zerstäubungsgas austritt und unter einem Winkel von etwa 20° auf den aus der Schmelzaustrittsöffnung 20 austretenden Schmelzstrahl auftrifft.

### Bezugszeichenliste

- 1: Schmelzvorrichtung
- 2: Zerstäubungskammer
- 3: Ringdüse
- 4: Zerstäubungsbehälter
- 5: erste Gasentspannungsstation
- 6: Gasheizeinrichtung
- 7: zweite Gasentspannungsstation
- 8: Zuführrohr
- 9a: erste Düsen
- 9b: zweite Düsen
- 10: Auffangbehälter
- 11: Bodenabzug
- 12: Zyklonabscheider
- 13: Kühlvorrichtung
- 14: erster Behälter
- 15: Gaslanze
- 16: zweiter Behälter
- 17: Zuführleitung
- 18: Mischrohr
- 19: Ringspalt
- 20: Schmelzaustrittsöffnung

## Patentansprüche

1. Verfahren zur Herstellung eines Pulvers durch Zerstäubung eines Strahls aus geschmolzenem Metall mittels eines darauf auftreffenden Zerstäubungsgases, wobei
a) als Zerstäubungsgas ein reaktives Gas verwendet wird, so daß durch Reaktion des Zerstäubungsgases mit dem Metall oder einem Legierungsbestandteil desselben eine Verbindung gebildet wird und
b) die Temperatur des Zerstäubungsgases und die Abkühlungsgeschwindigkeit so eingestellt werden, daß die Temperatur des Zerstäubungsgases beim Auftreffen auf den Strahl mindestens dem 0,3-fachen der Schmelztemperatur in °C des Metalls entspricht und die Abkühlungsgeschwindigkeit kleiner als 10² K/s ist, so daß das Metall oder der Legierungsbestandteil desselben in einem Schritt im wesentlichen vollständig in die Verbindung umgewandelt wird.

2. Verfahren nach Anspruch 1, wobei die Temperatur des Zerstäubungsgases beim Auftreffen auf den Strahl größer oder gleich der Schmelztemperatur in °C des Metalls ist.

3. Verfahren nach einem der vorhergehenden Ansprüche, wobei die Verbindung ein Metalloxid, -nitrid oder -carbid ist.

4. Verfahren nach einem der vorhergehenden Ansprüche, wobei als Zerstäubungsgas Luft, Stickstoff, Ammoniak, Sauerstoff, kohenstoffhaltiges Gas oder ein Gemisch davon verwendet wird.

5. Verfahren nach Anspruch 4, wobei dem Zerstäubungsgas oder dem Gemisch Edelgas zugesetzt wird.

6. Verfahren nach einem der vorhergehenden Ansprüche, wobei das Metall eine mindestens aus einem ersten und einem zweiten Legierungsbestandteil gebildete Legierung ist.

7. Verfahren nach Anspruch 6, wobei der erste Legierungsbestandteil in schmelzflüssigem Zustand in einem ersten Behälter (14) und ein zweiter Legierungsbestandteil in schmelzflüssigem Zustand in einem zweiten Behälter (16) aufgenommen ist und wobei der erste und der zweite Legierungsbestandteil in einem zu einer Schmelzauslaßöffnung (20) führenden Mischrohr (18) gemischt werden.

8. Verfahren nach Anspruch 7, wobei die Schmelze des ersten Legierungsbestandteils mit Sauerstoff gesättigt wird.

9. Verfahren nach einem der Ansprüche 7 oder 8, wobei der zweite Legierungsbestandteil unter inerten Bedingungen geschmolzen wird.

10. Verfahren nach einem der Ansprüche 7 bis 9, wobei der erste Legierungsbestandteil Silber oder Kupfer ist.

11. Verfahren nach einem der Ansprüche 7 bis 10, wobei der zweite Legierungsbestandteil Zinn (Sn), Indium (In), Wismut (Bi) oder ein Gemisch davon ist.

12. Verfahren nach einem der vorhergehenden Ansprüche, wobei der Durchsatz an Zerstäubungsgas auf 1 bis 10 Nm³/min eingestellt wird.

13. Verfahren nach einem der vorhergehenden Ansprüche, wobei der Vordruck des Zerstäubungsgases auf 1 bis 50 bar eingestellt wird.

14. Verfahren nach einem der vorhergehenden Ansprüche, wobei das Metall während der Reaktion zumindest zeitweise in einer im wesentlichen horizontalen Flugbahn geführt wird.

15. Verfahren nach einem der vorhergehenden Ansprüche, wobei zur Einstellung der Abkühlungsgeschwindigkeit stromabwärts der Schmelzauslaßöffnung (20) Zerstäubungsgas auf den Partikelstrom geführt wird.

16. Verfahren nach einem der vorhergehenden Ansprüche, wobei das Pulver nach der Bildung der Verbindung gekühlt wird.

17. Verfahren nach einem der vorhergehenden Ansprüche, wobei das Pulver zum Kühlen mit, vorzugsweise verflüssigtem, Gas oder Wasser beaufschlagt wird.

## Claims

1. A process for producing a powder by atomizing a jet of molten metal by means of an atomization gas which impinges on the jet, in which process
a) the atomization gas used is a reactive gas, so that a compound is formed by reaction of the atomization gas with the metal or an alloying constituent thereof, and
b) the temperature of the atomization gas and the cooling rate are set in such a way that the temperature of the atomization gas when it impinges on the jet is at least 0.3 times the melting point in °C of the metal and the cooling rate is less than 10² K/s, so that the metal or the alloying constituent thereof is substantially completely converted into the compound in one step.

2. The process as claimed in claim 1, in which the temperature of the atomization gas when it comes into contact with the jet is greater than or equal to the melting point in °C of the metal.

3. The process as claimed in one of the preceding claims, in which the compound is a metal oxide, metal nitride or metal carbide.

4. The process as claimed in one of the preceding claims, in which the atomization gas used is air, nitrogen, ammonia, oxygen, carbon-containing gas or a mixture thereof.

5. The process as claimed in claim 4, in which noble gas is added to the atomization gas or the mixture.

6. The process as claimed in one of the preceding claims, in which the metal is an alloy formed at least from a first and a second alloying constituent.

7. The process as claimed in claim 6, in which the first alloying constituent is held in the molten state in a first vessel (14), and a second alloying constituent is held in the molten state in a second vessel (16), and in which the first and second alloying constituents are mixed in a mixer pipe (18) which leads to a melt outlet opening (20).

8. The process as claimed in claim 7, in which the melt of the first alloying constituent is saturated with oxygen.

9. The process as claimed in one of claims 7 or 8, in which the second alloying constituent is melted under inert conditions.

10. The process as claimed in one of claims 7 to 9, in which the first alloying constituent is silver or copper.

11. The process as claimed in one of claims 7 to 10, in which the second alloying constituent is tin (Sn), indium (In), bismuth (Bi) or a mixture thereof.

12. The process as claimed in one of the preceding claims, in which the throughput of atomization gas is set to 1 to 10 Nm³/min.

13. The process as claimed in one of the preceding claims, in which the admission pressure of the atomization gas is set to 1 to 50 bar.

14. The process as claimed in one of the preceding claims, in which the metal is guided in a substantially horizontal trajectory at least from time to time during the reaction.

15. The process as claimed in one of the preceding claims, in which, to set the cooling rate, atomization gas is guided onto the particle stream downstream of the melt outlet opening (20).

16. The process as claimed in one of the preceding claims, in which the powder is cooled after the compound has been formed.

17. The process as claimed in one of the preceding claims, in which the powder is acted on by, preferably liquefied, gas or water for cooling purposes.

## Revendications

1. Procédé pour produire une poudre en pulvérisant un jet de métal fondu au moyen d'un gaz de pulvérisation projeté sur lui, sachant que
a) on utilise en tant que gaz de pulvérisation un gaz réactif de manière à ce qu'en réagissant avec le métal ou avec un composant d'alliage de celui-ci, le gaz de pulvérisation forme un composé et que
b) la température du gaz de pulvérisation et la vitesse de refroidissement sont réglées de telle manière que la température du gaz de pulvérisation atteignant le jet correspond à au moins 0,3 fois la température de fusion du métal exprimée en degrés Celsius et que la vitesse de refroidissement soit inférieure à 10² K/s, de façon à ce que le métal ou le composant d'alliage de celui-ci puisse être transformé essentiellement entièrement en composé en une seule étape.

2. Procédé selon la revendication 1, sachant que la température du gaz de pulvérisation atteignant le jet est supérieure ou égale à la température de fusion du métal exprimée en degrés Celsius.

3. Procédé selon l'une des revendications précédentes, sachant que le composé est un oxyde - un nitrure - ou un carbure métallique.

4. Procédé selon l'une des revendications précédentes, sachant que l'on utilise en tant que gaz de pulvérisation de l'air, de l'azote, de l'ammoniac, de l'oxygène, un gaz carboné ou un mélange de ceux-ci.

5. Procédé selon la revendication 4, sachant que l'on ajoute au gaz de pulvérisation ou au mélange un gaz rare.

6. Procédé selon l'une des revendications précédentes, sachant que le métal est un alliage constitué d'au moins un premier et un second composant d'alliage.

7. Procédé selon la revendication 6, sachant que le premier composant d'alliage est recueilli après fusion complète dans un premier récipient (14) et un second composant d'alliage est recueilli après fusion complète dans un second récipient (16), et que le premier et le second composants d'alliage sont mélangés dans un tube de mélange (18) menant à une ouverture de sortie (20) de la masse fondue.

8. Procédé selon la revendication 7, sachant que la masse fondue du premier composant d'alliage est saturée avec de l'oxygène.

9. Procédé selon la revendication 7 ou 8, sachant que le second composant d'alliage est fondu dans des conditions inertes.

10. Procédé selon l'une des revendications 7 à 9, sachant que le premier composant d'alliage est de l'argent ou du cuivre.

11. Procédé selon l'une des revendications 7 à 10, sachant que le second composant d'alliage est de l'étain (Sn), de l'indium (In), du bismuth (Bi) ou un mélange de ceux-ci.

12. Procédé selon l'une des revendications précédentes, sachant que le débit du gaz de pulvérisation est réglé sur une valeur comprise entre 1 et 10 Nm³/min.

13. Procédé selon l'une des revendications précédentes, sachant que la pression d'admission du gaz de pulvérisation est comprise entre 1 et 50 bars.

14. Procédé selon l'une des revendications précédentes, sachant que, pendant la réaction, le métal est guidé au moins temporairement sur une trajectoire essentiellement horizontale.

15. Procédé selon l'une des revendications précédentes, sachant que, pour régler la vitesse de refroidissement en aval de l'ouverture de sortie (20) de la masse fondue, du gaz de pulvérisation est projeté sur le flux de particules.

16. Procédé selon l'une des revendications précédentes, sachant que la poudre est refroidie après formation du composé.

17. Procédé selon l'une des revendications précédentes, sachant que, pour refroidir la poudre, on l'expose à du gaz de préférence liquéfié ou à de l'eau.
